# EUROPEAN PATENT APPLICATION

(11) **EP 1 203 522 A1**
(43) Date of publication of application: **08.05.2002**
(21) Application number: 01309283.8
(22) Date of filing: 01.11.2001
(51) Int. Cl.: A01B 45/02

(54) **Ground injection apparatus**

(30) Priority: 03.11.2000 GB 0027102
(71) Applicant: Sisis Equipment (Macclesfield) Limited, Macclesfield, Cheshire, SK10 2LZ (GB)
(72) Inventor: Hargreaves, Jonathan William, Nr. Congleton, Cheshire CW12 2NS (GB); Hartley, Brian, Macclesfield, Cheshire, SK11 7QN (GB)
(74) Representative: Ajello, Michael John

(57) **Abstract**

Ground injection, e.g. aeration, apparatus adapted to be mounted on or drawn by a tractor and comprising one or more tines (12) reciprocated vertically by a crank (13) and crank shaft (13a) driven from a motor (14). Each tine (12) defines an internal passage (27) with outlet apertures (28). A piston rod (19) connected to each tine and to a cylinder (21) has a piston (20) which forces air into a reservoir (23) and via a line (25) into the passage (27). The mechanism is timed such that a pulse of air is injected into the ground through outlet apertures (28) at the position of maximum penetration of the ground by each tine (12). Instead of air, a liquid or other gaseous substance may be injected into the ground where it is penetrated by each tine. The apparatus may include two or more rows of such tines and associated injection means.

## Description

THIS INVENTION concerns apparatus for injecting air or other substances into the ground and may consist of a machine adapted to be towed, for example, by a tractor and having a plurality of tines, preferably in a plurality of rows thereof and all connected to a drive mechanism for causing the tines repeatedly to penetrate the ground as the machine is drawn or propelled over the latter.

Aeration, for example, is carried out to relieve compaction of the ground, allow water penetration and in the case of turfed areas, to allow air to reach the grass roots to improve root depth.

Typically, aeration machines comprise a drive shaft, and each tine is connected via a crank to the drive shaft with a linkage which causes it to rise and fall to make penetrating engagement with the ground, usually to a depth of some 400mm.

An object of the present invention is to enhance the action of penetration by injecting a substance into the ground where it is penetrated by the or each tine.

According to the present invention there is provided a ground injection apparatus comprising at least one tine, drive means for causing the tine repeatedly to penetrate the ground in use, and means to inject a substance into the ground where it is penetrated by the tine.

The apparatus may comprise several tines connected to a common drive means and adapted sequentially to penetrate the ground.

The tine or tines may be hollow defining an internal passage with one or more outlet apertures the injection means communicating with the passage whereby the substance injected into the passage is discharged through the outlet apertures.

A pump to introduce the substance into the internal passage may be connected to the drive system for the tine and adapted to deliver a predetermined quantity of the substance into the internal passage during penetration of the ground by the tine.

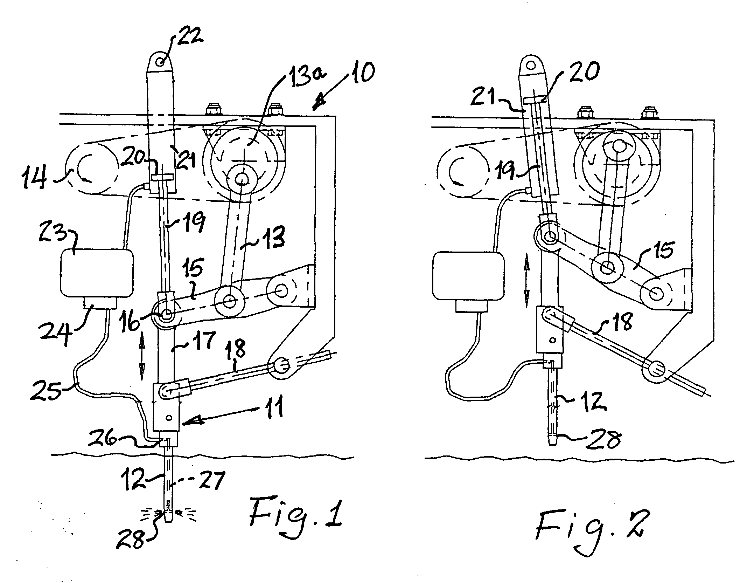

An embodiment of the invention will now be described, by way of example only, with reference to the accompanying drawings in which:-
Figs. 1 and 2 are operationally sequential schematic views of a ground aeration apparatus constructed in accordance with the invention showing the tine inserted in and withdrawn from the ground respectively.

The drawings show a ground aeration apparatus generally indicated at 10 adapted to be mounted on or drawn by a tractor (not shown) and comprising a row of tine assemblies 11 each having a tine 12, the latter being reciprocated in a vertical direction by crank 13 attached to a crankshaft 13a, belt driven from a motor 14.

The crank 13 causes oscillation of a pivoted arm 15 pivotally connected at 16 to an assembly 17 supporting the tine 12. A parallel link arm 18 maintains the movement of the tine in a generally vertical direction.

In accordance with the invention there is also pivotally attached at 16 a piston rod 19 whose piston 20 is located in a cylinder 21 pivotally attached at 22 to a part of the machine. Downwards movement of the piston 20 within the cylinder 21 causes air to be displaced into a reservoir 23 having a valve 24 to release the air via a line 25 into a port 26 at the base of the assembly 17.

As indicated at 27, the tine 12 has a central bore communicating with the port 26 and terminating in a pair of outlet apertures 28.

In use, the mechanism is arranged such that for each penetrating movement of each tine 12 a pulse of air is injected via valve 24 from reservoir 23 into the bore 27 so that the air is injected into the ground at the lowermost position occupied by the tine at maximum penetration. The pulse may be arranged such that the air continues to be injected during vertical passage of the tine through the soil whereby the air is distributed throughout the depth of penetration of the tine including the upper and surface regions.

On the upward movement of the tine, the valve 24 is closed to prevent further flow of air until the tine descends into the ground once again. Fig. 2 shows the apparatus with the tine withdrawn.

On a machine comprising several rows of tines, each may be equipped with an air pump, reservoir and valve whereby air is injected into the ground during each penetration.

If required, valving may be provided to turn off the air supply for applications where air injection is not required or is disadvantageous.

It is not intended to limit the invention to the above examples alone, and includes any system which can deliver a substance into the ground where it is penetrated by the tine. This could include a separate hollow tine which penetrates the ground subsequent to penetration by a solid tine.

Whilst this description has referred to the injection of a pulse of air into the ground, other fluid materials including gases, liquids and powders may be introduced in the same manner. Thus, for example, the ground may be dosed with a fertiliser or weed killer in the surface region and to a depth of some 400mm or more.

The substance may be fed to the respective tines in timed sequence, from a common supply mounted on the apparatus or on a tractor.

Although preferably tractor drawn or propelled, the apparatus may be mounted on an independent carriage which may be motor driven or manually propelled.

## Claims

1. A ground injection apparatus comprising at least one tine, drive means for causing the tine repeatedly to penetrate the ground in use, and means to inject a substance into the ground where it is penetrated by the tine.

2. Ground engaging apparatus according to Claim 1, comprising several tines connected to a common drive means and adapted sequentially to penetrate the ground.

3. Ground injection apparatus according to Claim 1 or Claim 2, wherein the or each tine is hollow defining an internal passage therein with one or more outlet apertures, the injection means communicating with the passage such that the substance injected into the passage is discharged through the outlet apertures.

4. Ground injection apparatus according to any preceding claim, including a pump to introduce the substance into the internal passage, the pump being connected to the drive system for the tine and adapted to deliver a predetermined quantity of the substance into the internal passage sequentially according to an instantaneous position of the tine as determined by the drive means.

5. Ground injection apparatus according to Claim 4, wherein the pump is adapted to introduce the substance into the internal passage during penetration of the ground by the tine.

6. Ground injection apparatus according to Claim 4, wherein the pump is adapted to introduce the substance into the internal passage at a position of maximum penetration of the ground by the tine.

7. Ground injection apparatus according to any preceding claim, comprising at least one row of tines, each tine being adapted to be reciprocated in a vertical direction by a crank attached to a crank shaft and driven by a motor.

8. Ground injection apparatus according to any preceding claim, including a parallel link arm connected to the or each tine to maintain the movement of the tine in a generally vertical direction.

9. An air injection apparatus according to any one of Claims 4 to 6, wherein said pump comprises a fluidic ram having a piston and piston rod connected to each tine thus to cause the fluid content of the ram to be delivered to the internal passage during penetration of the ground by the tine.

10. A ground injection apparatus according to Claim 9, including a reservoir connected to the fluidic ram to receive fluidic substance therefrom and having a valve to release the predetermined quantity of such substance to the internal passage only during penetration of the ground by the tine.

11. Ground injection apparatus according to Claim 9 or Claim 10, wherein said fluid ram is a pneumatic cylinder adapted to deliver air to the internal passage for injection into the ground.

12. Air injection apparatus according to any one of Claims 1 to 10, wherein the substance injected into the ground by the injection means is a liquid.

13. An air injection apparatus according to Claim 3, wherein the internal passage within each tine extends generally throughout the length of the tine and communicates with at least one outlet aperture in the region of the lowermost extremity of the tine in use.

14. Ground injection apparatus according to any preceding claim, adapted such that the substance is fed to a plurality of tines in timed sequence from a common supply mounted on the apparatus.

15. Ground injection apparatus according to any preceding claim, mounted on a carriage.
